# EUROPEAN PATENT APPLICATION

(11) **EP 3 104 504 A1**
(43) Date of publication of application: **14.12.2016**
(21) Application number: 15171933.3
(22) Date of filing: 12.06.2015
(51) Int. Cl.: H02K 21/24, H02K 9/22

(54) **STATOR FOR AN ELECTRICAL MACHINE**

(71) Applicant: Höganäs AB (publ), 263 83 Höganäs (SE)
(72) Inventor: Stannard, Nick, Newcastle-Upon-Tyne, Tyne and Wear NE30 4NB (GB)

(57) **Abstract**

A stator for an electrical machine, the stator comprising a stator core and one or more coils; wherein the stator further comprises at least one cooling member, the cooling member comprising a heat receiving part and a heat conducting part wherein the heat receiving part is arranged in thermal contact with the coil so as to allow heat flow from the coil into the cooling member; and wherein the heat conducting part extends from the heat receiving part away from the coil so as to conduct heat received by the heat receiving part away from the coil.

## Description

The present invention relates to an electrical machine and to a stator for such an electrical machine.

### BACKGROUND

Dynamo-electrical machines, i.e. electrical generators or electrical motors, are electromechanical energy converters converting mechanical power into electrical power and/or vice versa. The conversion is based on the forces resulting from electromagnetic interaction between electrical currents and magnetic flux in a moving part, also called rotor, and in a stationary part called stator. In a permanent magnet type machine, the moving part is usually provided with permanent magnets generating a magnetic field which is coupled to the stator via a flux carrying magnetic circuit across an air gap. The stator comprises one or more coils made of an electrically conducting material for carrying an electrical current. Typically, the stator further comprises a stator core forming part of the magnetic circuit. The coils are typically wound around a coil body portion of the stator core. Dynamo-electrical machines are in the following merely referred to as electrical machines.

During operation, heat is generated in the coils of an electrical machine, and it is generally desirable to allow the generated heat to dissipate out of the machine so as to ensure proper operation of the machine and to prevent components of the machine from being damaged or to avoid other negative impact on the lifetime of the machine. To this end, it is known to provide allow a cooling medium, such as air or another gas, oil, water or another liquid to circulate passed the coils so as to allow heat transfer away from the coils.

Electrical machines are often required to be sealed units to prevent debris from entering the machine and from damaging the coils and magnets. This presents a particular problem for air-cooled machines because the heat generated in the coil must travel a long path from the coil through the stator core into the stator case from where it can be dissipated to the atmosphere. In addition to the length of the path, each interface between different materials implies an additional thermal resistance which the heat energy must overcome. These problems are particularly acute if the stator coils are encapsulated in epoxy since epoxy has a particularly low thermal conductivity which leads to inefficient cooling of the stator coil.

### SUMMARY

Disclosed herein are embodiments of an electrical machine comprising a stator and a rotor, the rotor being operable to rotate about an axis of rotation; the stator comprising a stator core and one or more coils; wherein the stator further comprises at least one cooling member; the cooling member comprising a heat receiving part and a heat conducting part wherein the heat receiving part is arranged in thermal contact with at least one of the one or more coils so as to allow heat flow from the coil into the cooling member; and wherein the heat conducting part extends from the heat receiving part away from the coil so as to conduct heat received by the heat receiving part away from the coil.

Accordingly, the cooling member may efficiently receive heat from the coil via its heat receiving part and guide the heat away from the coil via its heat conducting part so as to allow the heat to be more efficiently dissipated, e.g. via other parts of the electrical machine such as the shaft or a housing of the machine and to the environment.

In some embodiment, the cooling member is formed as a separate component different from the stator core and different from the coil. Consequently, the cooling member may efficiently be manufactured from a suitable material and so as to have a suitable shape and size. In some embodiments, the cooling member is made from a heat conductive, non-magnetic material, such as aluminium or an aluminium alloy. In some embodiments, the cooling member is made from a material having a thermal conductivity of 75 W/(m·K) or more, preferably 100 W/(m·K) or more, most preferably 150 W/(m·K) or more. In some embodiments, the cooling member is made from a material having a magnetic susceptibility of less than 10⁻², preferably less than 10⁻³, most preferably less than 10⁻⁴. When the heat receiving part and the heat conducting part are made from the same material and/or formed as a single component, the heat transport away from the coil is further improved. Further, when the cooling member is in thermally conductive contact with the winding, it substantially reduces the length of the heat path and the number of interfaces between heat source and sink. Hence the heat transport relies to a lesser extent on the heat conduction by the stator core material but exploits heat transport through a cooling member that is attached to the coil and transports heat away from the coils, e.g. to an external part of the motor. It will be appreciated that the cooling member may be in direct physical contact with the coil or be separated from the coil by one or more separating layers of material that may preferably also have a high thermal conductivity and/or be sufficiently thin to provide efficient heat transport between the electrically conductive coil material and the cooling member. For example, the electrically conductive coil windings are typically electrically insulated from the cooling member where the electrically insulating layer may be regarded as a part of the coil.

The coils may have different geometries. In some embodiments, the coil defines a coil centreline around which the turns of the coil are wound; the centreline may be a straight axis or curved. Generally, the coil defines an outer circumferential surface defined by the radially most outward turns of the coil; the coil further defines two outer end faces spaced apart from another along the coil centreline and defining the length of the coil along the coil centreline. In some embodiments, the end faces of a coil may be parallel to each other, e.g. facing an axial direction of the coil. In other embodiments, the end faces may be inclined to each other. In some embodiments, the stator may comprise two or more coils that are arranged next to each other such that one end of one coil faces a corresponding opposite end of the other coil. The heat receiving part defines a heat receiving surface and, in some embodiments, the heat receiving surface is in thermal contact with one end face of the coil, e.g. abuts the end face of the coil. In particular, the heat receiving part may be formed as a heat receiving plate whose one side defines a heat receiving surface. The plate may thus be arranged parallel with the end face of the coil, e.g. normal to the coil axis or normal to a centreline of the coil at the end of the coil, and with the heat receiving side of the plate touching the end face of the coil or at least being in thermal contact with the end face of the coil. In some embodiments the cooling plate may be sandwiched between two coils, e.g. such that both sides of the cooling plate face an end of a respective one of the coils. In other embodiments, the cooling plate is sandwiched between an end of the coil and a part of the stator core, e.g. a pole portion or tooth portion of the stator core.

The present disclosure relates to different aspects including the stator described above and in the following, and to corresponding methods, apparatus and/or products. Each aspect may yield one or more of the benefits and ad-vantages described in connection with one or more the other aspects, and each aspect may have one or more embodiments with all or just some of the features corresponding to the embodiments described in connection with one or more the other aspects and/or disclosed in the appended claims. In particular, disclosed herein are embodiments of an electrical machine comprising a stator as disclosed herein and a moving member operable to move relative to the stator. In a rotary machine, the moving member is a rotor operable to rotate about an axis of rotation. Further disclosed herein are embodiments of a stator segment for a stator for an electrical machine, the stator segment being configured to be assembled at least with other stator segments so as to form stator; the stator segment comprising a stator core segment and one or more coils; wherein the stator segment further comprises at least one cooling member, the cooling member comprising a heat receiving part and a heat conducting part wherein the heat receiving part is arranged in thermal contact with the coil so as to allow heat flow from the coil into the cooling member; and wherein the heat conducting part extends from the heat receiving part away from the coil so as to conduct heat received by the heat receiving part away from the coil.

In a rotary electrical machine, the rotor and the stator usually have rotational symmetry with respect to a common axis of rotational symmetry. The rotor is configured for rotating about the common axis of rotational symmetry which is also referred to herein as the axis of rotation. Depending on the design, the rotary electrical machine may have one or more rotors and one or more stators. In the simplest design, the electrical machine comprises a single stator and a single rotor facing each other. While this design is conceivable, other designs may often be more advantageous. For example, an advantageous axial flux electrical machine with an internal rotor design may have an internal rotor sandwiched between two external stators; another advantageous axial flux electrical machine may have external rotors sandwiching an internal stator (internal stator design); furthermore, a multi-stage axial flux electrical machine may also have a plurality of internal rotors stacked in the axial direction with internal stators in an alternating manner, wherein the stack at either end terminates with an external rotor or an external stator.

In the rotary geometry, geometrical terms are normally defined with reference to the axis of rotation as follows: Axial directions are parallel to the direction of the axis of rotation, radial directions are perpendicular to the axis of rotation, and circumferential directions are tangential to a circle about the axis of rotation, i.e. perpendicular to the axial directions and perpendicular to a radial direction at a finite radial distance from the axis of rotation. An angle between two circumferential directions is thus equal to the central angle between the corresponding radial directions. Planes, such as cross-sectional planes or planes of projection/elevation, are referred to by their orientation, i.e. an axial plane/cross-section is taken in a plane perpendicular to the axial direction, a radial plane/cross-section is taken in a plane perpendicular to the radial direction, and a circumferential plane/cross-section is taken in a plane perpendicular to the circumferential direction. When reference is made to axial, radial or circumferential directions these are thus intended to refer to directions relative to the axis of rotation of the electrical machine unless where otherwise indicated. In particular, for the purpose of the present description, directions may sometimes be defined relative to a stator coil. To this end, a coil defines a coil centreline around which the coil is wound; a radial direction relative to the coil refers to a direction perpendicular to the centreline, and a circumferential direction relative to the coil is tangential to a circle about the centreline.

The magnetic circuit of the electrical machine comprises an air gap between the rotor and the stator. In an axial flux electrical machine, the magnetic flux that is coupled across the air gap is oriented in an essentially axial direction. In a permanent magnet electrical machine the magnetic circuit comprises permanent magnets for generating a magnetic field. In one type of permanent magnet electrical machine, permanent magnets are distributed on the rotor along a circumferential direction. In some embodiments, the permanent magnets form pole faces that are oriented in a direction across the air gap to form a rotor side of the air gap, whereas the stator is provided with one or more coils for interaction with the magnetic field emanating from the permanent magnets of the rotor.

The stator core forms part of the magnetic circuit. Generally, the stator core comprises a coil body portion around which the coil is wound, i.e. the coil body portion extends through the coil along the direction of the coil centreline. The stator core may further comprise one or more pole portions each defining a pole face that faces towards the rotor so as to define the stator side of the air gap. In some embodiments, the pole portions are formed as teeth protruding from the body portion and towards the rotor. In other embodiments the pole portions are formed as a flange or plate attached to an end of the body portions that extends out from a coil.

The coil body portion extends out of one end or out of both ends of the coil along the direction of the coil centreline. Accordingly, the heat receiving part may comprise a through hole, a cut-out or other suitable opening through which the coil body portion projecting out of the end of the coil extends. For example, the heat receiving part may be an annular plate having a through hole. Alternatively, the heat receiving part may be V-shaped or U-shaped or have another shape defining an aperture through which the coil body portion may extend.

The heat receiving part may comprise one or more slits extending through the heat receiving part such that the heat receiving part forms a plurality of fingers extending normal to the coil centreline or at least normal to the magnetic field generated by the coil at the position of the heat receiving member. In particular, the slits may extend along a direction normal to the coil axis. Such slits reduce Eddy currents in the heat receiving part that may otherwise be induced by the alternating magnetic field generated by the coil.

The heat conducting part may extend from the heat receiving part in an axial and/or radial direction relative to the axis of the electrical machine. To this end, the cooling member may be formed as a cooling plate, also referred to as a cooling fin. A first part, e.g. a first end, of the cooling plate may define the heat receiving part while another part defines the heat conducting part. For example, when the heat receiving part of the cooling plate touches an end face of the coil, the heat receiving part of the cooling plate may extend in a plane parallel to the end face of the coil that is touched by the heat receiving part. In particular, the heat receiving part of the cooling plate may extend in a plane facing the direction of the coil centreline as defined at the end of the coil that is touched by the heat receiving part; the heat conducting part may extend radially away from the coil relative to the coil centreline. In some embodiments, the heat conducting part of the cooling plate may comprise one or more bends, such that at least an axial portion of the heat conducting part extends away from the heat receiving part and from the coil along the direction of the coil centreline. The heat conducting part may include one or more further bends, e.g. such that the heat conducting part comprises a further, distal radial part that extends along a radial direction relative to the coil centreline, e.g. parallel with, but axially displaced from, the heat receiving part of the cooling plate. In some embodiments, the cooling plate is an L-shaped or a U-shaped or a T-shaped plate. For example, one leg of an L-shaped plate may form the heat receiving part while the other leg may form the heat conducting part. Similarly, the central leg of a T-shaped plate may form the heat receiving part while the cross-bar of the T-shaped plate may form the heat conducting part.

In some embodiments, the stator is a segmented stator comprising a plurality of stator segments that may be circumferentially arranged around the axis of rotation so as to form the stator. Each stator segment may comprise one or more coils, a stator core segment of the stator core and one or more cooling members. In some embodiments the coils of the stator segments are arranged with their respective coil centreline along the axial direction of the electrical machine. In other embodiments, the coils may be arranged with their centrelines along a circumferential direction relative to the electrical machine, e.g. so as to form a toroidal structure. In some embodiments, the stator core segments are in direct contact with respective adjacent stator core segments. In other embodiments, the stator core segments are not in direct contact with each other.

In some configurations, the stator coils may be provided in a toroidal winding topology. A toroidal winding topology refers to windings running in a poloidal direction around a toroid-shape to form a coil with a coil centreline pointing in a circumferential direction. Note, that a helical coil with a toroidal topology will have poloidal windings with circumferential components corresponding to the pitch of the helix. Typically, the toroid-shape is defined by the coil body. The stator core may be "slot-less". Advantageously, however, the stator core is "slotted", i.e. the stator core has a toroidal body portion running in a circumferential direction and teeth projecting from the body portion. The teeth thus form the pole portions of the stator core. The slot is for receiving a respective coil wound around the body portion in a poloidal direction. The teeth project in an axial direction, wherein the teeth have a proximal portion attached to the body portion, and a distal portion with pole faces. The teeth may be shaped to have distal portions that are widened as compared to the proximal portions so as to at least partially cover the coils on the side facing towards the respective rotor. Hence, in a segmented stator, each stator core segment may comprise a coil body portion and one or more teeth or other forms of pole portions extending from the body portion towards the rotor. The body portions of the stator core segments may thus be arranged so as to form a toroidal shaped such that neighbouring coil body portions touch each other.

In other configurations, the stator coils define a coil centreline pointing in the axial direction of the electrical machine. Accordingly, the stator core comprises a corresponding number of coil body portions extending in the axial direction of the machine. In such a configuration, the pole portions may be formed as flanges or plates attached to respective sides if the body portions, so as to form a bobbin-shaped element for receiving a coil. Hence, in a segmented stator, each stator core segment may comprise an axial body portion having a pole portion at one end or pole portions at both ends. One example of this type of axial machine is the so-called yokeless and segmented armature (YASA) machine where the individual stator segments are magnetically not connected with each other by any yoke portion. The stator core segments may be interconnected by a stator support structure made from non-magnetic material so as to form a ring-shaped structure. For example, the stator support structure may be made from epoxy, from glass fibre reinforced plastic (GFRP), etc. or combinations thereof.

In an embodiment where the cooling member is formed as a cooling plate, at least the heat receiving part of the cooling plate may extend in a plane parallel to the end face of the coil to which the heat receiving part is attached. The heat conducting part of the cooling plate may thus also extend in the same plane and, optionally, if the heat conducting part is bent, in a different plane, e.g. a radial plane relative to the coil centreline. Hence, in an embodiment where the coils are arranged with their coil centrelines along the axial direction of the electrical machine, the heat receiving part of the cooling plate may face the axial direction of the machine. In an embodiment, where the coils are arranged with their coil centrelines along the tangential direction of the electrical machine, the heat receiving part of the cooling plate may face a tangential direction relative to the axis of the electrical machine. The heat conducting part of the cooling plate may thus extend in a tangential plane and, optionally, if the heat conducting part is bent, in an axial plane relative to the electrical machine.

A part of the heat conducting part of the cooling member may be arranged in thermal contact with a heat sink, e.g. a part of the housing of the electrical machine or a central hub, or a water jacket. To this end, the heat conducting part may be in physical contact with the heat sink.

In some embodiments, the stator comprises a support structure, e.g. a frame, having receiving elements, each for receiving a stator segment. For example, the support structure may be formed as a disc, e.g. an annular disc, having holes arranged in a ring, each hole may be shaped and sized so as to receive a coil and a coil body portion of a stator core segment such that the coil centreline extends along the axial direction of the disc. Each stator segment may comprise cooling members that extend radially, e.g. radially outwards or radially inwards, relative to the disc and on one side or on both sides of the disc. The stator may comprise one or two cover discs configured to be positioned on either side of the support structure. The cover discs may comprise holes aligned with the holes of the support structure so as to allow respective tooth portions of the core segments to extend axially through the holes of the cover discs. The heat receiving parts of the cooling members may thus be sandwiched between a central disc and a respective one of the cover discs.

The coils of various embodiments may be made from any suitable electrically conductive material, e.g. copper or a copper alloy. The coils may e.g. be made from round copper wire or, more preferably, from copper strip or ribbon, e.g. from a single or double strip of copper wire or another suitable electrically conductive material. When copper strip is used heat can travel along the direction of the centreline of the coil within the copper to the cooling member without having to cross the many boundaries between strands of wire, which is very inefficient. The thermal conductivity between strands of wire in a coil is about 0.3-0.5 W/m/k but within the solid copper it is 390 W/m/k, which represents a significant improvement. Accordingly, in some embodiments, the coil is made from strips of an electrically conductive material, such as copper, such that heat transport along the direction of a centreline of the coil towards an end of the coil has to cross preferably less than five interfaces between strips, e.g. less than three interfaces, e.g. less than two interfaces and, most preferably, if a single strip is used, no interface at all.

In some embodiments, the coil comprises a coil sheath covering at least a part of the circumferential surface of the coil. The sheath may be made from a thermally insulating material so as to protect other components of the machine from the heat generated by the coil. For example, the stator components may be embedded in a support structure made from e.g. epoxy or GFRP, and the sheaths may thus thermally insulate the support structure from the coil.

In some embodiments, the rotor comprises ribs or fins forming a fan operable to create an air flow that passes the heat conducting parts of the cooling members.

According to some embodiments, the stator core is made of a soft magnetic material. Magnetically "soft" refers to materials like annealed iron, which can be magnetized but do not tend to stay magnetized, i.e. materials having low coercivity. The soft magnetic material may e.g. be laminated sheet metal as commonly used for forming magnetic cores in electromagnets or electrical machines. However, owing to the higher complexity of the shape, the stator core segments are preferably made of a soft magnetic material, e.g. a soft magnetic powder, that can be shaped by a moulding technique.

According to some embodiments, the soft magnetic material is a soft magnetic composite (SMC). Using a soft magnetic composite material has the advantage that complex shapes of a stator core or of stator core segments may be produced at a high throughput using moulding techniques, such as compression moulding followed by stress relieving heat treatment. In contrast to sintering such stress relieving heat treatment is performed under conditions which will not destroy the electrically insulating coating of the soft magnetic composite particles. An advantageous example of a mouldable SMC is Somaloy available from Höganäs AB, 263 83 Höganäs, Sweden.

The rotor may carry permanent magnets so as to form an air gap between the pole faces of the stator and cooperating pole elements of the rotor. In some embodiments of an axial flux permanent magnet electrical machine, the pole elements of the rotor are permanent magnets carried on a support disk and oriented in an axial direction. Alternatively, according to some embodiments, the rotor comprises permanent magnets that are oriented in the circumferential direction in contact with pole elements made of a soft magnetic material. The permanent magnets alternate with the pole elements and are arranged to form a rotor disk. The pole elements have pole surfaces oriented in an axial direction towards the pole faces of the stator, wherein the pole surfaces of the rotor pole elements define the rotor side of the axial air gap, and wherein the pole faces of the stator pole portions define the stator side of the axial air gap. In some embodiments, the permanent magnets are recessed in an axial direction from the air gap, and the pole elements bulge towards the air gap. Thereby an improved flux coupling from the permanent magnets towards the air gap and to the stator is achieved and cogging forces of the axial flux permanent magnet electrical machine are reduced.

### BRIEF DESCRIPTION OF THE DRAWINGS

Embodiments of the invention will be described in more detail in connection with the appended drawings. In particular,
- Figs. 1A-E: illustrate a stator according to a first embodiment;
- Figs. 2A-G: illustrate a second embodiment of a stator for an air-cooled axial flux machine and, in particular for a machine having YASA topology;
- Figs. 3A-B: show an example of a rotor for an air-cooled axial flux machine;
- Figs. 4A-C: show an embodiment of an air-cooled axial machine;
- Fig. 5: shows another embodiment of a stator segment for segmented YASA stator for an air-cooled axial flux machine;
- Fig. 6: shows another embodiment of a segmented YASA stator for an axial flux machine;

- Fig. 7: shows another embodiment of a segmented YASA stator for a water-cooled axial flux machine;
- Figs. 8A-F: illustrate another embodiment of an air-cooled axial machine having a YASA topology and a segmented stator;
- Figs. 9A-B: illustrate a further feature that may be employed in conjunction with any of the embodiments described herein;
- Figs. 10A-C: illustrate another embodiment of an air-cooled axial machine having a YASA topology and a segmented stator;

### DETAILED DESCRIPTION

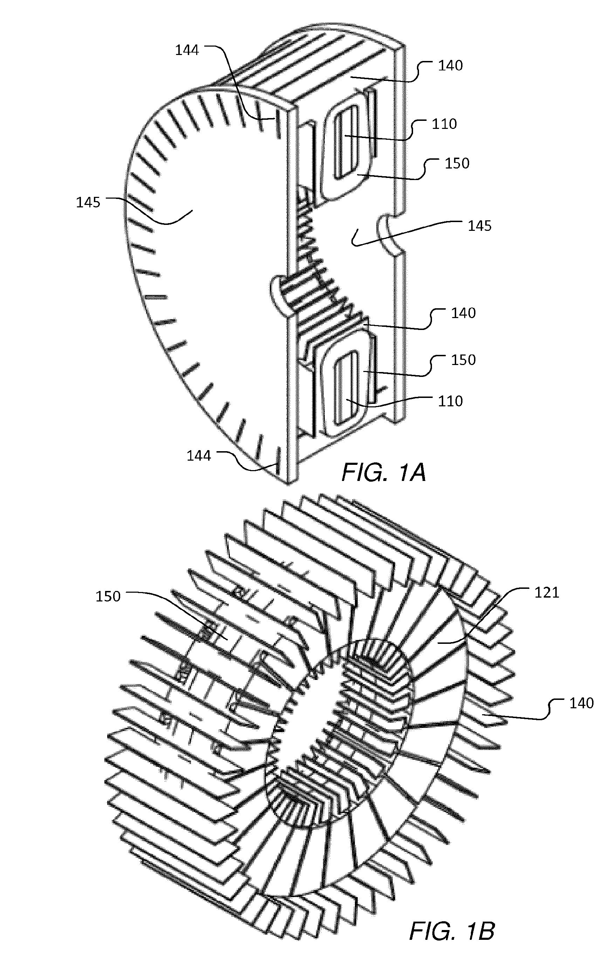

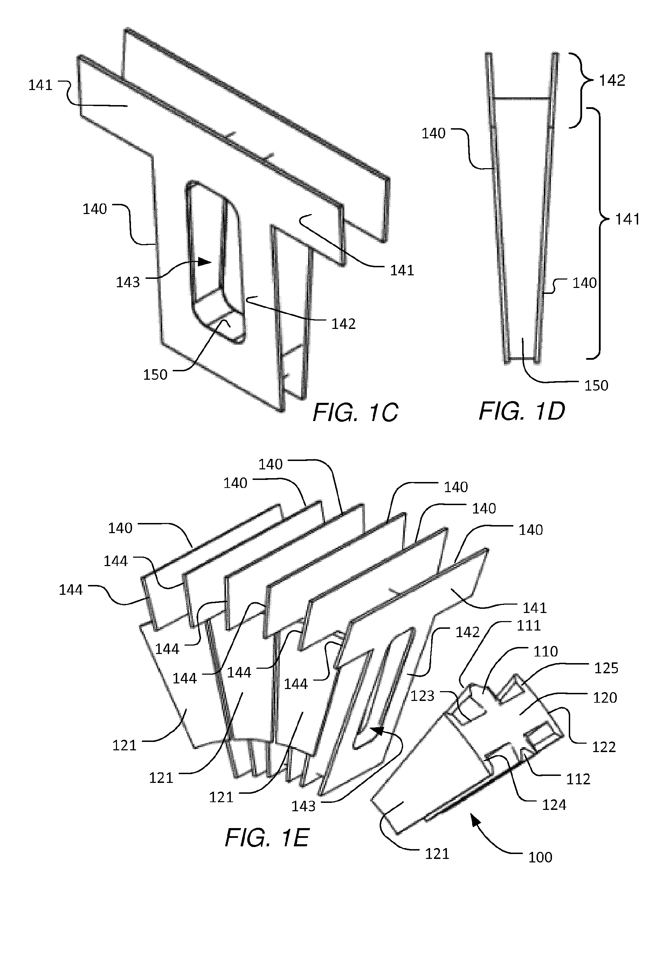

Figs. 1A-E illustrate a stator according to a first embodiment. In particular, Fig. 1A shows a cut-away view of the stator. Fig. 1B shows a view of the magnetically active parts of the stator and cooling members of the stator. Figs. 1C-D show a perspective and a side view of a stator coil with attached cooling members. Fig. 1E shows a number of stator segments forming a portion of a stator. In Fig 1E, one stator core segment is shown displaced from the other stator core members.

Referring to Figs.1A-E, the stator according to the first embodiment is an air-cooled stator having a torus topology. The stator is for an inner stator machine having two rotors, one on each side of the stator. The stator is a segmented stator where each segment comprises a stator core segment 100, a coil 150 and two cooling plates 140. Each stator core segment 100 comprises a coil body portion 110 and a tooth portion 120. The coil body portion 110 extends in a circumferential direction of the stator with a first abutment face 111 facing towards a first circumferential direction and a second abutment face 112 facing in a second circumferential direction opposite to the first circumferential direction. The first and second abutment faces 111, 112 of the coil body portion 110 are inclined with respect to each other by an angle corresponding to the segment angle to be covered by the stator core segment 100. The outer surface of the coil body portion 110 facing in axial and radial directions is formed to receive a coil element 150 with a toroidal winding. The tooth portion 120 forms a first pole face 121 oriented in a first axial direction and a second pole face 122 oriented in a second axial direction. The tooth portion 120 projects from the coil body portion 110 in an axial direction and forms respective first and second pole portions 124, 125 at an axial distance from the coil body portion 110, wherein the pole portions 124, 125 provide the axially oriented first and second pole faces 121, 122. When arranged in a stator core assembly, the abutment faces 111, 112 of adjacent stator core segments 100 contact each other, wherein the inclination of the abutment faces defines the angle of inclination between the adjacent stator core segments, as illustrated in Fig. 1E by the arrangement of three adjacent stator core segments. The first and second abutment faces 111 and 112 are shaped and sized to form mating surfaces so as to support and stabilize each other in the circular arrangement. The pole portions 124 and 125 are wider in the circumferential direction as a transitional part 123 of the tooth portion, thus defining a space between the coil portion and the pole portion for accommodating a part of a coil 150 while providing a large pole face area 121, 122.

Figs.1A-B illustrate an annular stator assembly where the stator core is made up from a plurality of stator core segments each covering a respective segment angle. The stator core assembly is provided with coils 150 wound onto the coil body portions 110 and in the slots formed by the tooth portions 120 of adjacent stator core segments, wherein the coil centrelines of the coils are oriented in the circumferential direction of the machine. Thereby a toroidal winding topology is achieved with the toroidal direction along the circumferential direction of the stator core assembly, and the windings of the coils running in a poloidal direction thereto. The coils 150 may be made from any suitable electrically conductive material, e.g. copper or a copper alloy. In some embodiments, the coils are wound from a flat ribbon. The stator core segments 100 are arranged to abut each other in a circumferential direction by their mating abutment faces 111, 112 of the respective coil body portions 110. The stator core segments 100 are interleaved with coil elements 150 and cooling plates 140 arranged on the coil body formed by the abutting coil body portions 110. The cooling plates 140 are sandwiched between the coils 150 and the circumferential faces of the intermediate portions 123 of the tooth portions 120. Each coil element 150 has an opening having an inner contour which is shaped and dimensioned to match the outer contour of the coil body portion 110 of a stator core segment 100. The coil body portion 110 thus supports the coil element 150 in a mechanically stable manner. The coil element 150 has end faces that are inclined with respect to each other to form a wedge-shape that fits the inclined circumferential faces of the tooth portions in the slot between abutting stator core segments 100.

The cooling plates may be made from aluminium or another suitable material, preferably a non-magnetic material having a high heat conductivity. The cooling plates 140 are T-shaped where the leg of the T forms a heat receiving part 142 and the cross-bar of the T forms a heat conducting part 141. One side of the heat receiving part 142 of the cooling plate is attached to an axial end face of one of the coils 150. To this end, the leg of the T comprises a through hole 143 shaped and sized so as to match the corresponding central void of the coil 150 and to allow the heat receiving part 142 to be fitted onto one of the coil body portions 110. The leg is further shaped and sized such that it covers the entire axial end face of the coil and such that the leg fits into the gap formed between the coil body portion 110 and the pole portions 124, 125 of a stator core segment. Accordingly, the cooling plate 140 receives heat from the entire annular end face of the coil. In the assembled stator, the heat receiving part 142 of a cooling plate is sandwiched between the coil 150 and the tooth part 120 of one of the stator segments 100 such that the coil body portion 110 of the stator segment 100 extends through the hole 143 and into the central opening of the coil 150. A cooling plate 140 is attached to each end face of each coil 150, i.e. each coil is sandwiched between two cooling plates. Each cooling plate 140 is oriented in a plane parallel to the corresponding end face of the coil to which it is attached. Hence, the cooling plates are oriented normal to the tangential direction of the stator such that neighbouring cooling plates define an angle between them corresponding to their distance form each other along the circumferential direction, as is best seen in Fig. 1D.

The cross-bar of the T forms a heat conducting part 141 of the cooling plate 140. The heat conducting part 141 is formed at the radially outward end of the cooling plate and extends in the axial direction of the stator. In the assembled machine, the heat conducting part 141 of the cooling plate extends axially from the stator and passes a rotor disk (not shown) that is located coaxially with, and next to, the stator such that the heat conducting parts 141 of the cooling plates are located radially outwards relative to the rotor. At their distal ends 144, the heat conducting parts of the cooling plates 140 are attached to a face plate 145 arranged coaxially with, and parallel to, the stator. The distal ends 144 of the heat conducting parts of the cooling plates extend into corresponding slits formed along a circumference of the face plate 145 so as to allow heat to be transferred from the heat conducting parts 141 of the cooling plates 140 to the face plate 145 from where the heat may be dissipated to the surroundings. The face plate 145 is arranged at an axial distance from the respective pole faces 121, 122 of the stator core elements where the distance is defined by the axial lengths of the heat conducting parts 141 of the cooling plates. Hence, a space for accommodating a disc-shaped rotor is defined between the pole faces of the stator core segments and the face plate. The rotor disc may have permanent magnets arranged on the side of the rotor disc that faces the stator. The permanent magnets are arranged such that they face the respective ones of pole faces 121, 122 that face the rotor. In the example of Figs. 1A-E, the stator is for an outer rotor machine where a central stator is sandwiched between two disc-shaped rotors, each rotor disc being sandwiched between the central stator and an outer face plate. It will be appreciated, however, that other embodiments may comprise only a single rotor disc on one side of the stator. Yet other embodiments may be of the outer stator type where a central rotor is sandwiched between two stator rings.

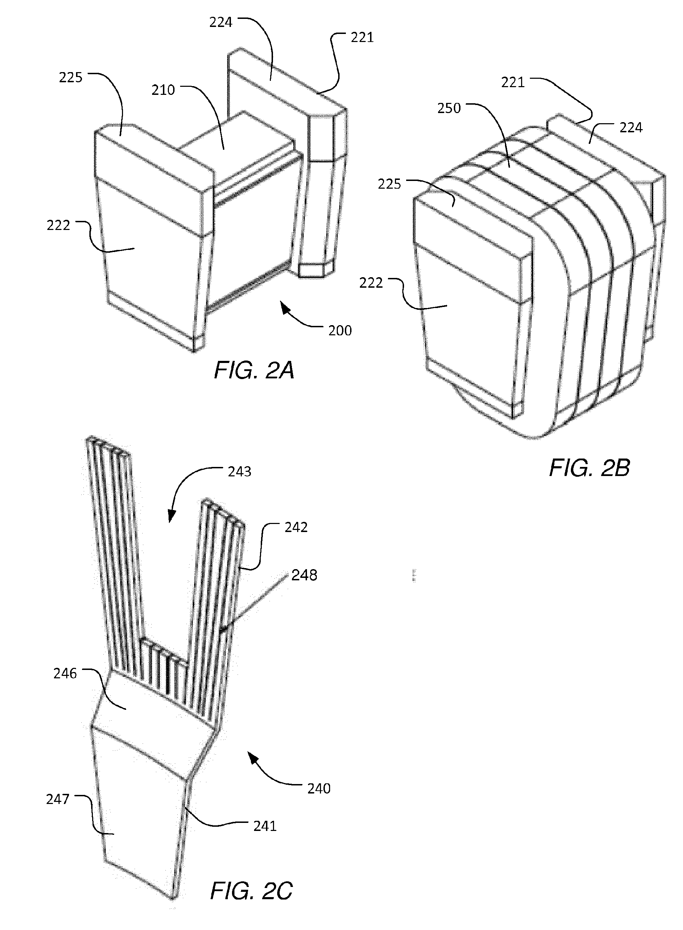

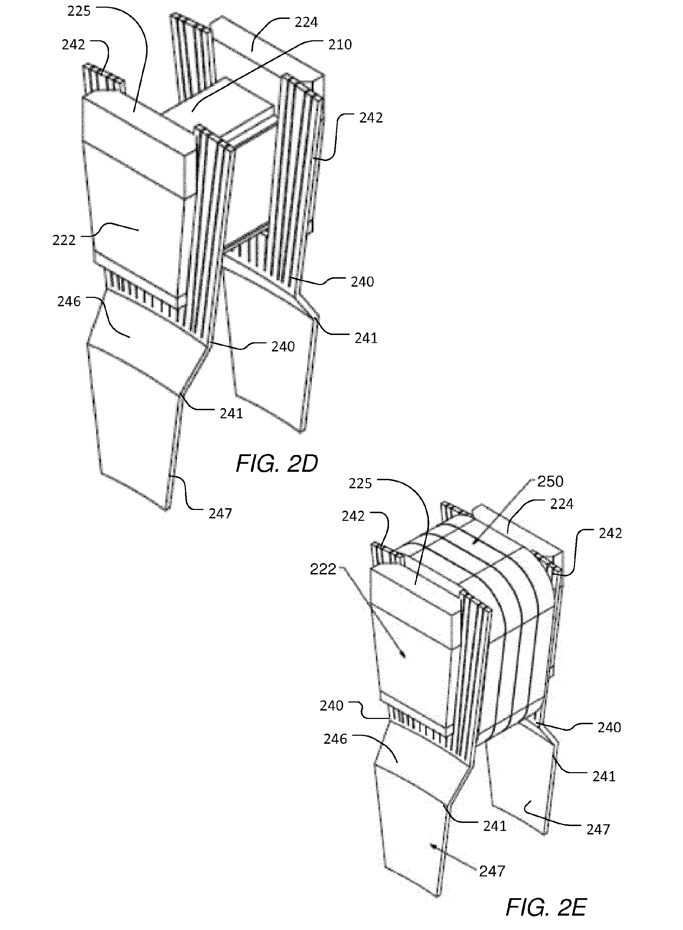

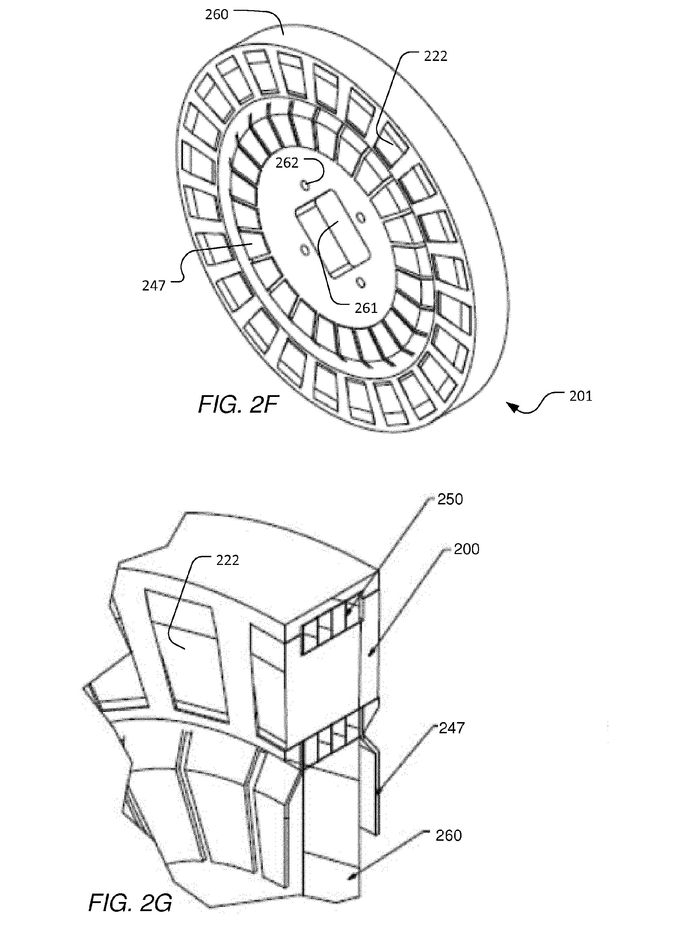

Figs. 2A-G illustrate a second embodiment of a stator for an air-cooled axial flux machine and, in particular, for a machine having YASA topology. Fig. 2A shows a stator core segment of the stator of the machine. Fig. 2B shows the stator core segment assembled with a coil. Fig. 2C shows an embodiment of a cooling plate. Fig. 2D shows the stator core segment assembled with two cooling plates. Fig. 2E shows an assembled stator segment. Fig. 2F shows an embodiment of an assembled stator, and Fig. 2G shows an enlarged cut-away view of a part of the stator.

Referring to Figs. 2A-G, the stator, generally designated 201, of this embodiment is a segmented stator having a YASA topology. Hence, in contrast to the previous embodiment, the stator segments are not magnetically interconnected by a yoke. Instead the stator is formed by separate stator core segments that are arranged in a ring-shaped assembly and held in place by a non-magnetic support structure 260, e.g. made from epoxy. The support structure comprises a number of mounting holes 262 and a central hole for receiving a stator a hub, as will be described in detail below.

Each stator segment comprises a stator core segment 200, a stator coil 250 and two cooling plates 240. The stator core segment 200 has a bobbin shape comprising a coil body part 210 around which the coil is wound such that the coil body part 210 extends through the central opening of the coil along the direction of the coil centreline. At each end of the coil body part 210 a respective pole portion 224, 225 is formed. The pole portions are wider than the central coil body part such that the stator core segment has a generally H shaped cross section along planes parallel with, and extending through, the coil centreline. Hence the coil wound around the coil body part 110 is accommodated between the pole portions 224 and 225. The pole portions 224 and 225 define respective pole faces 221 and 222, respectively, facing in the direction of the coil centreline away from the coil.

The coil 250 may be made from any suitable electrically conductive material, e.g. copper or a copper alloy. In some embodiments, the coil is wound from a flat ribbon.

The cooling plates 240 are generally Y-shaped, where the upper arms of the Y define a heat receiving part 242 of the cooling plate and the central leg of the Y defines a heat conductive part 241 of the cooling plate. The cooling plates are arranged at the respective axial ends of the coil 250 such that each heat receiving part 242 is sandwiched between the axial end face of the coil and one of the pole portions 224 and 225, respectively. Hence, one side of the heat receiving part of the cooling plate is in direct contact with an end face of the coil 250. To this end, the coil body part 210 of the stator core segment extends through the central slit 243 formed between the arms of the Y-shaped cooling plate. The arms 242 forming the heat receiving part are shaped and sized such that they cover the entire thickness of the winding.

In the assembled stator the stator segments are arranged with their respective coil centrelines extending along the axial direction of the stator, i.e. the stator segments are arranged with their coil centrelines parallel with each other and with their respective pole faces 121 and 122 facing the axial direction of the stator. The Y-shaped cooling plates 240 face the axial direction of the machine, such that the heat receiving arms extend radially outwards and the central heat conducting leg extends radially inwards away from the coil and towards a central hub of the machine. The heat receiving part 242 of the cooling plate comprises a number of slits extending along the radial direction. Hence, the heat receiving part 242 is formed by radially projecting fingers that are separated from each other by the slits. Since the heat receiving parts 242 of the cooling plates are placed in a changing magnetic field, the narrow radial slits reduce Eddy current losses.

The cooling plates may be made from aluminium or another suitable material, preferably a non-magnetic material having a high heat conductivity.

The heat conducting part 241 of the cooling plate is bent axially outward just below (i.e. radially inward of) the heat receiving part 242 that is in contact with the coil. The heat conducting part is again bent radially inwards such that the heat conducting part forms a slanted transitional part 246 and a distal radial part 247. The transitional part extends radially inward and axially outward from the base of the heat receiving part. The radially extending distal part 247 is generally parallel to the heat receiving part 224 but axially displaced outward relative to the heat receiving part and extending radially inward from the transitional part 246 that connects the heat receiving part 242 to the distal part 247. The axial displacement of the distal part 247 from the heat receiving part 242 is larger than the axial thickness of the pole portions 224 and 225, respectively. Hence, when the heat receiving part 242 is sandwiched between a pole portion and the coil, the distal part 247 extends axially outward and radially inward relative to pole faces.

When the stator segment is cast in a disc-shaped epoxy structure - or otherwise embedded into a support structure - having a thickness such that the pole faces 221 and 222 are aligned with the respective surfaces of the support structure, the distal parts 247 of the heat conducting part 241 of the cooling plates extend outside and at an axial distance from the epoxy structure 260 as is illustrated in Fig. 2G.

The stator of Figs 2A-G is for an external rotor configuration with two rotor plates, containing magnets on one side of the rotor plate such that they face the pole faces 221 and 222, respectively. The rotor plates may be attached to a hub extending through the central opening 261 of the stator.

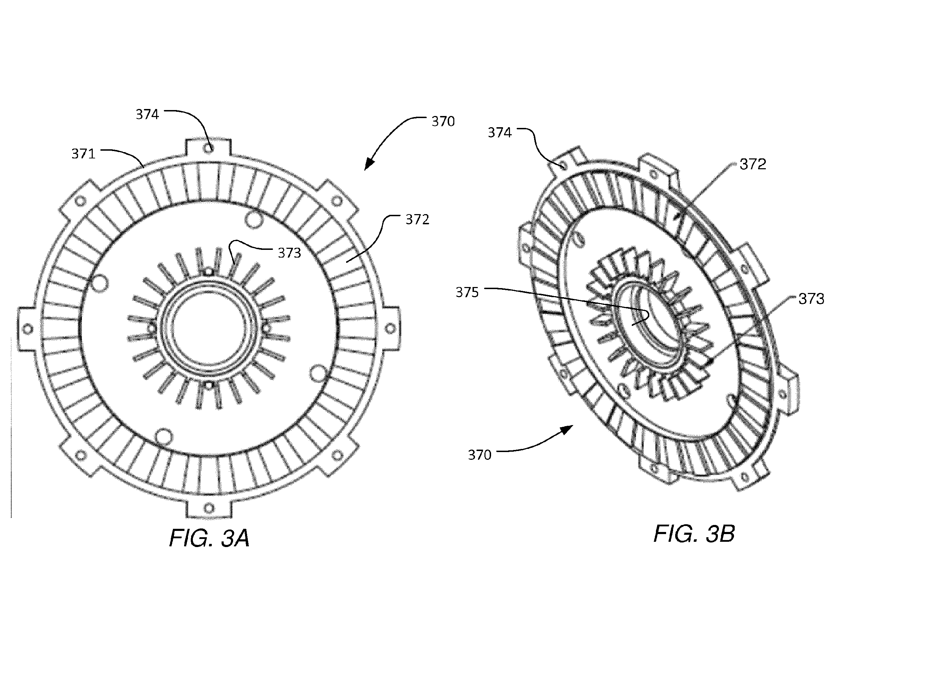

Figs. 3A-B show an example of a rotor for an air-cooled axial flux machine. A rotor as shown in Figs. 3A-B may be used together with the stator of Figs. 2A-G. A similar rotor may be used with the stator of Figs. 1A-E.

The rotor, generally designated 370, comprises an annular disc 371 and a number of permanent magnets 372 mounted on one side of the disc in a ring-shaped arrangement. The permanent magnets are mounted with one of their pole faces facing axially away from the disc 371, e.g. in an alternating sequence of north and south poles facing away from the disc. The inner periphery 375 of the annular disc defines a central hole through allowing the rotor disc to be mounted on a central hub, e.g. via suitably bearings so as to allow the rotor to rotate relative to the hub. The rotor disc 371 comprises mounting holes 374 along the outer periphery of the disc so as to allow the rotor disc to be connected to another rotor disc, as will be described below. The rotor disc further comprises a sequence of radially extending fins 373 that project axially away from the disc. The fins are arranged around the inner periphery of the annular disc. Hence, the fins 373 function as a fan when the rotor disc rotates. The fan facilitates an improved air flow pass the cooling plates of the stator. In some embodiments, the machine housing may comprise holes to allow ventilating air to enter and exit the housing. In other embodiments, the machine may be completely sealed and the internal fan only distributes the heat within the machine so it can be dissipated within the machine from all external surfaces available.

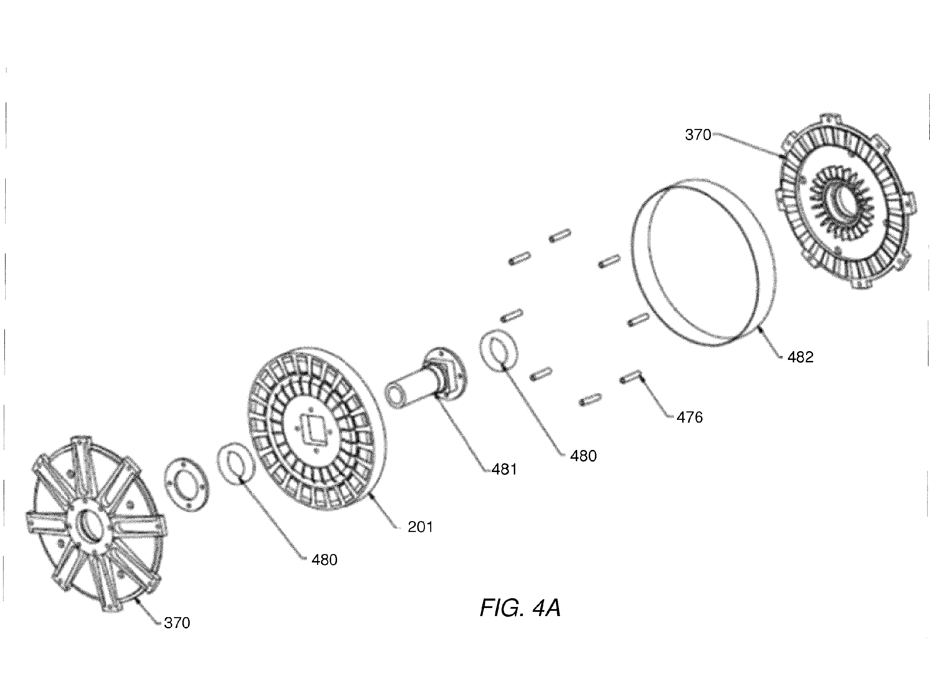

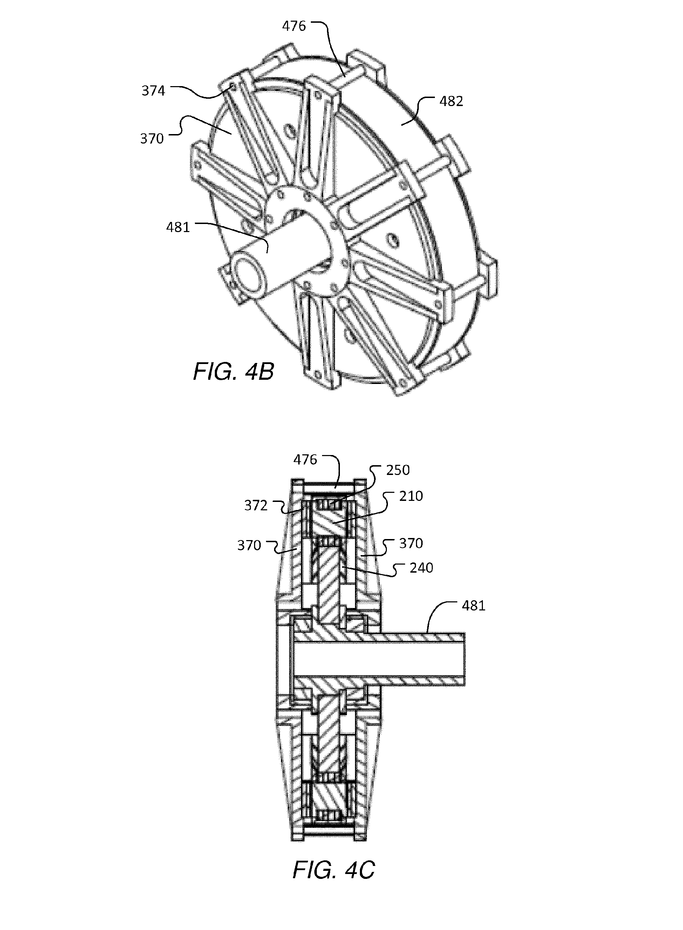

Figs. 4A-C show an embodiment of an air-cooled axial machine comprising a stator as shown in Figs. 2A-G and two rotor discs as shown in Figs. 3A-B. In particular, Fig. 4A shows an exploded view of the machine. Fig. 4B shows a view of the assembled machine, and Fig. 4C shows a cross sectional view of the machine in an axial-radial plane.

Referring to Figs. 4A-C and with continued reference to Figs. 2A-E and 3A-B, the machine comprises a stator 201 as described with reference to Figs. 2A-G and two rotors 370 as described with reference to Figs. 3A-B. The stator and the rotor discs are mounted on a hub 481 with the stator sandwiched between the rotor discs 370 such that the poles of the permanent magnets 372 of the rotors are radially aligned with and face the corresponding pole faces 221 and 222, respectively of the stator. The number and arrangement of the permanent magnets correspond the number an arrangement of the pole portions of the stator. The rotors 370 are rotatably mounted on the hub via suitable bearings 480. The rotors 370 are attached to each other via spacers 476 at an axial distance from each other so as to allow a space between the rotor discs for accommodating the stator. The spacers are mounted to each of the discs via the mounting holes 374 of the rotor discs 371. The machine further comprises an annular housing 482 that surrounds the stator 201 and is sandwiched between the rotors 370. The heat conducting distal parts 247 of the cooling plates 240 of the stator 201 extend from the stator coils 250 radially inwards in a gap defined between opposing faces of the epoxy structure of the stator and the corresponding rotor disc 371.

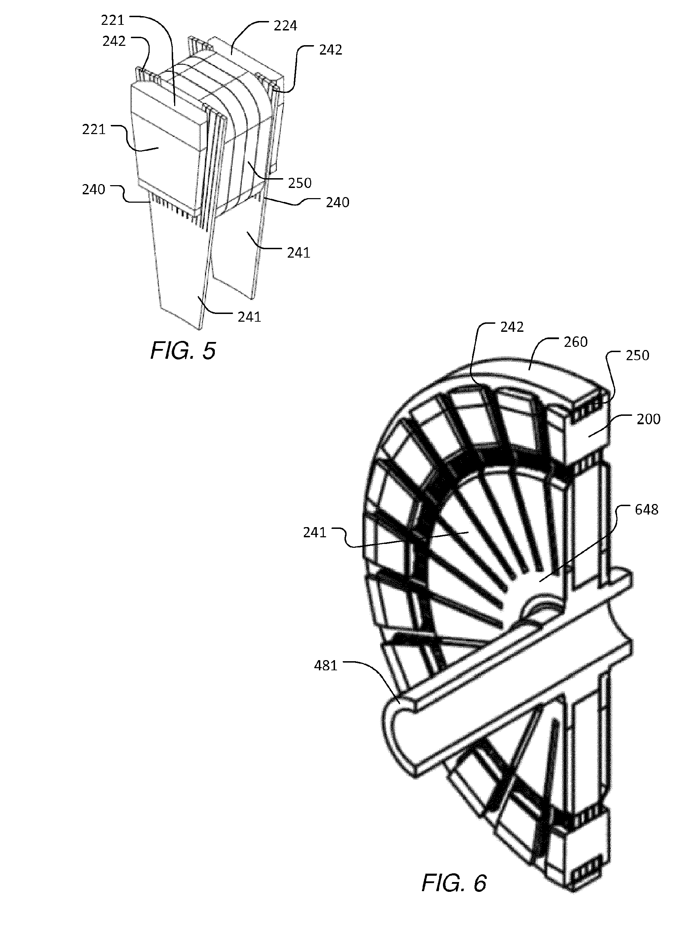

Fig. 5 shows another embodiment of a stator segment for segmented YASA stator for an air-cooled axial flux machine. The stator segment of Fig. 5 is similar to the stator segment shown in Fig. 2D and comprises a bobbin-shaped stator core segment, a coil 250 and two cooling plates 240, all as described in connection with Figs. 2A-G except that the cooling plates 240 of the present embodiment are flat plates that are not bent. Nevertheless, they may still be arranged outside of a stator support structure, e.g. by providing a part of the stator support structure with a reduced axial thickness.

Fig. 6 shows another embodiment of a segmented YASA stator for an axial flux machine. The stator of Fig. 6 is similar to the embodiment shown in Figs. 2A-G in the stator comprises a number of stator segments cast in a stator support structure 260, e.g. made from epoxy, which is mounted onto a central hub 481. Each stator segment comprises a stator core segment 200 and a coil 250 and where a heat receiving part 242 of a cooling plate is arranged in contact with each axial end face of the coils, all as described in connection with Figs. 2A-G and 5. In contrast to the embodiment of the previous embodiments, the stator comprises a single cooling plate on each side of the stator rather than individual and separate cooling plates for each stator segment. Each cooling plate comprises heat receiving parts 242 in contact with respective ones of the coils 250, and respective heat conducting parts 241 for transporting heat from the heat receiving parts radially inwards. The heat receiving and heat conducting parts may be shaped similar to the separate cooling plates of Figs. 2A-G and 5. However, in the present embodiment, the heat conducting parts are interconnected with each other by an annular portion 648 located at the radially inward end of the cooling plate. Hence, the individual radial heat conducting parts 241 extend from the inner annular part 648 radially outward like spokes from a central hub. The inner annular part 648 defines in inner periphery which is in thermal contact with the central hub 481 so as to allow heat to be transported by the heat conducting parts from the heat receiving parts and into the hub. The hub may be a tubular structure defining an axial void so as to allow a cooling medium to flow through the hub.

It will be appreciated that, in some embodiments, separate cooling plates as the ones shown in Figs 2C and 5 may also be shaped and sized so as to extend all the way to a central hub and by in physical contact with an outer surface of the hub.

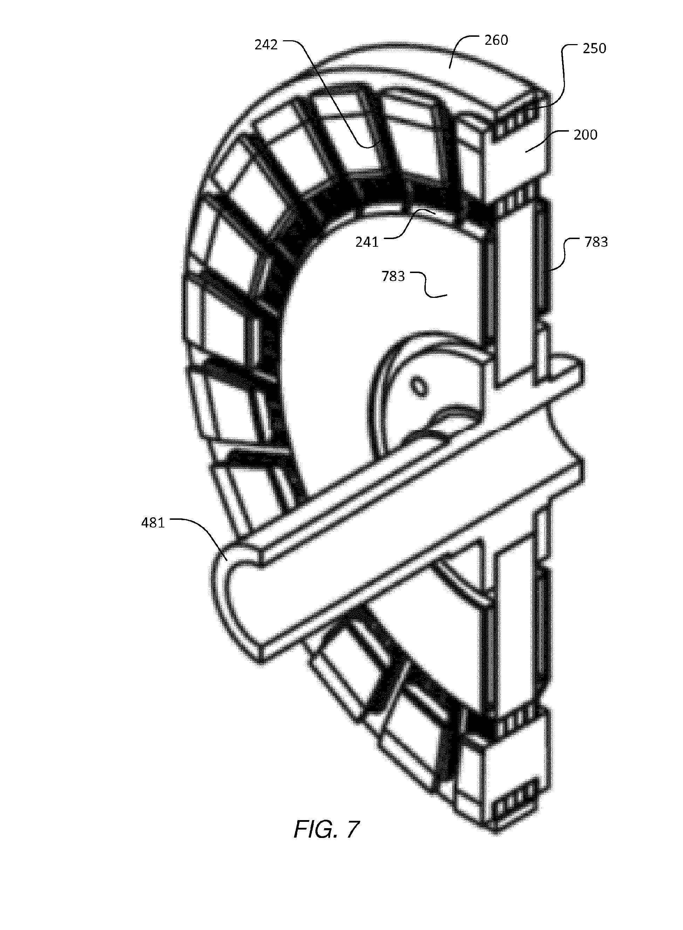

Fig. 7 shows another embodiment of a segmented YASA stator for a water-cooled axial flux machine. The stator of Fig. 7 is similar to the stator of Fig. 6 but further comprises two annular cooling jackets 783, one on each side of the stator. Each cooling jacket is a flat, hollow, annular member that is attached to the axially outer surfaces of the heat conducting parts 241 of one of the cooling plates. A cooling medium, e.g. water, may be circulated through a void defined inside the cooling jacket. To this end, the inner void of the cooling jacket may be in fluid communication with a cooling circuit via pipe work connected through the inner void of the tubular hub 481.

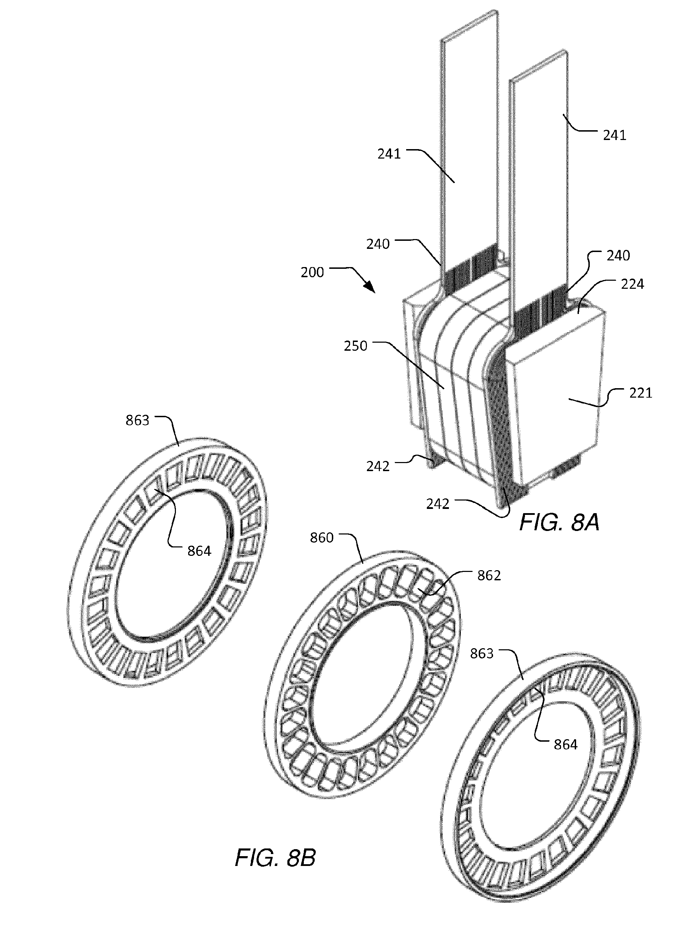

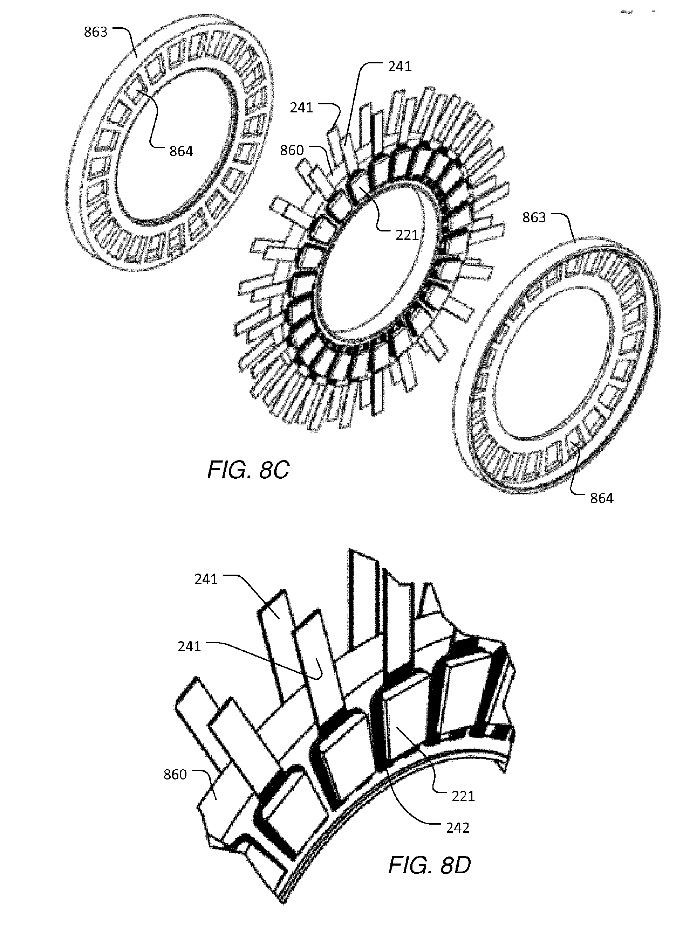

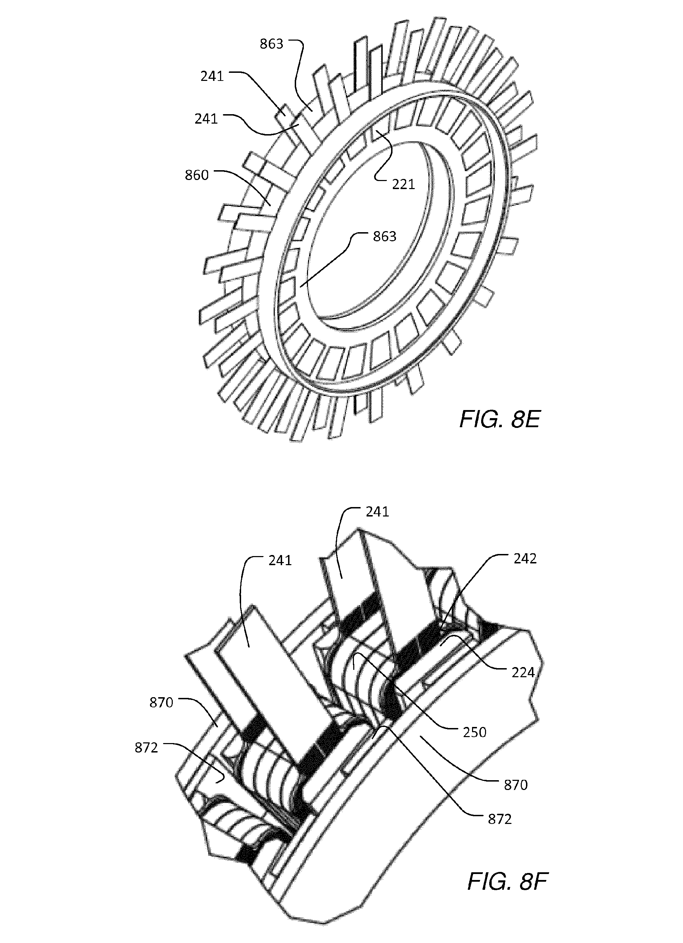

Figs. 8A-F illustrate another embodiment of an air-cooled axial machine having a YASA topology and a segmented stator. In particular, Fig. 8A shows a stator segment of the stator of the machine. Fig. 8B shows a central and two peripheral sections forming a support structure of the stator. Fig. 8C shows the stator segments assembled with the central section of the stator support structure. Fig. 8D shows an enlarged view of a part of the central section of the stator support structure assembled with stator segments. Fig. 8E shows the assembled stator. Fig. 8F shows a part of the assembled machine.

Referring initially to Fig. 8A, each stator section 200 is similar to the stator section of Fig. 5 in that it comprises a bobbin-shaped stator core segment 200, a coil 250 and two cooling plates 240, all as described in connection with Fig. 5, except that the cooling plates are arranged with their heat conducting parts 241 protruding radially outwards, away from the stator axis. As in the previous examples, the cooling plates may be made from a suitable non-magnetic material having good heat conducting properties such as aluminium.

Referring to Fig. 8B, the stator comprises a stator support structure formed by a 3-layer sandwich of non-magnetic, non-conducting material such as glass fibre reinforced plastic (GFRP). The support structure comprises a central annular section 860 and two peripheral annular sections 863 forming annular cover discs. The central section 860 comprises a number of through holes 862 distributed along the ring where each hole 862 is shaped and sized to receive one of the coils 250. The central section is sandwiched between the peripheral sections 863. Each peripheral section comprises holes 864, each shaped and sized so as to receive one of the pole portions 224, 225 of a stator core segment.

Referring to Figs. 8C-D, the stator may be assembled by inserting the coils 250 into the respective holes 862 of the central section of the stator support structure. In one embodiment, the coils are initially wound around a stator core segment and the assembled coil and stator core segment are then inserted into one of the holes. Alternatively, the stator core segment may be formed from two halves, each halve comprising one of the pole portions. In such an embodiment, the coil may initially be inserted into one of the holes 862, and the stator core segment halves may then be inserted into the central hole of the coil from respective sides of the coil.

In any event, the cooling plates may then be slid into place between the pole portions and the coil, resulting in an assembly as shown in Fig. 8C. Subsequently, the peripheral sections 863 may be attached to the respective sides of the central section such that the pole faces 221 and 222 extend through respective ones of the holes 864, as is illustrated in Fig. 8E.

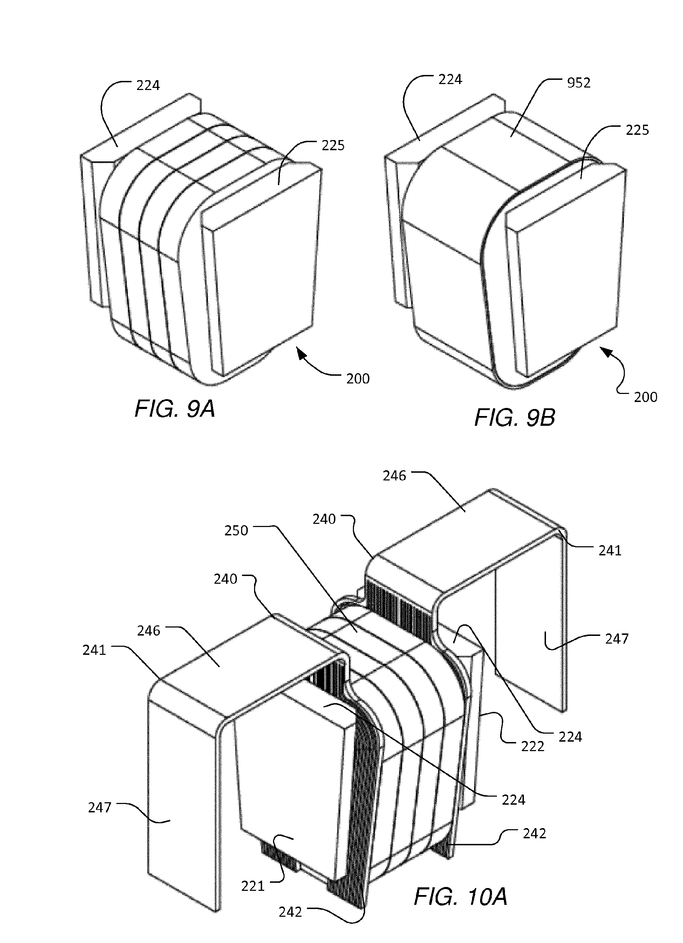

The thin heat conducting parts 241 of the cooling plates may then be connected to a stator housing to form a continuous thermal conduction path. For example, they may be bent axially outward so as to allow them to be connected to outer face plates, e.g. as described with reference to Figs. 10A-C below.

Two ring-shaped rotors 870 with permanent magnets 872 may then rotate on each side of and coaxially with the assembled stator, as illustrated in Fig. 8F In Fig. 8F the stator support structure has been omitted so as to provide a better view of the active components of the machine. As illustrated in Fig. 8F, in this and similar embodiments, the heat receiving part of the cooling plate is positioned between the coil and the permanent magnets of the rotor.

Figs. 9A-B illustrate a further feature that may be employed in conjunction with any of the embodiments described herein. In particular, Fig. 9A shows an example of stator core segment of a segmented stator core. A coil body portion of the stator core segment is surrounded by a coil 250. Fig. 9B illustrates that the circumferential surface of the coil may be surrounded by a heat insulating sheath 952 so as to insulate a stator support structure, e.g. made from epoxy, GFRP or the like as shown in Figs. 2F, 6 or 8D, that may surround the coil against the heat generated in the coil. For example, the support structure may be made from GFRP as described above. GFRP has an operating temperature range of only 100-120 °C, compared to 180-200 °C for standard copper enamelled wire. To allow the full temperature range of the copper to be achieved without compromising the structural integrity of the GFRP, a heat insulating sheath 952 can be used around the coil. The sheath may be made from a non-magnetic, non-conducting material with low thermal conductivity such as the insulating material available from DuPont under the name Nomex or a glass-mica composite such as the material available from Professional Plastics under the name Ceramatest. Since the heat travels axially within the stator towards the heat receiving parts of the cooling members, the insulating sheath will not affect heat transfer in the coil but will allow a higher armature temperature to be achieved.

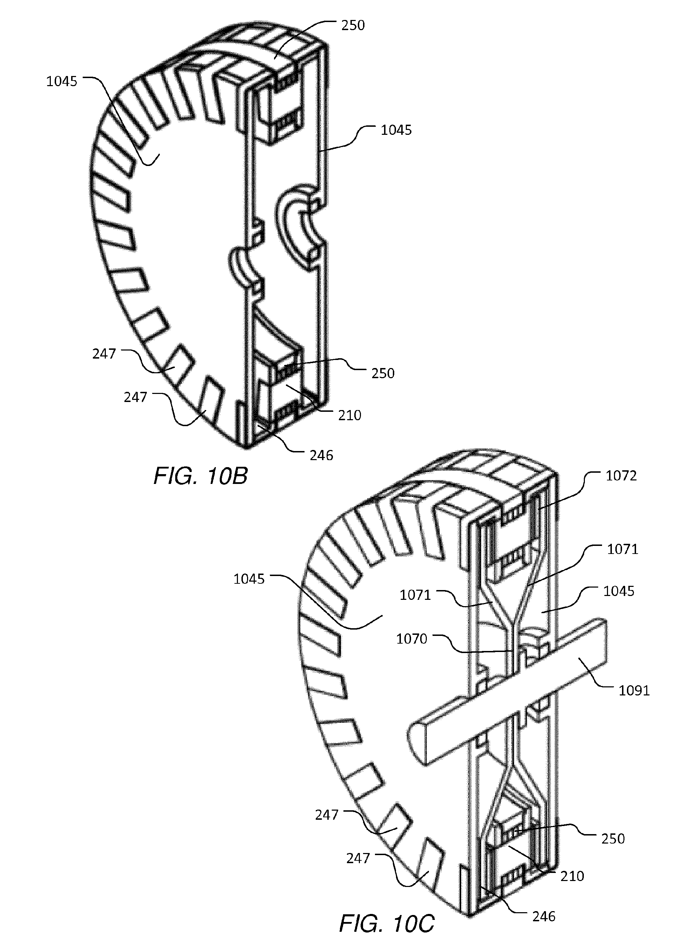

Figs. 10A-C illustrate another embodiment of an air-cooled axial machine having a YASA topology and a segmented stator. In particular, Fig. 10A shows a stator segment of the stator of the machine. Fig. 10B shows a cut-away view of the assembled stator of the machine while Fig. 10C shows a cut-away view of the assembled machine.

Referring initially to Fig. 10A, the stator segment is similar to the stator segment discussed in connection with Fig. 8A, but where the heat conducting parts 241 of the cooling plates are bent axially outwards so as to form an axial portion 246. The heat conducting parts are further bent radially inwards at an axial distance from the heat receiving part 242 so as to form a distal portion 247 that extends radially inward, but at an axial distance to the heat receiving part. Consequently, a gap is formed between the pole faces 221 and 222 of the stator core segment and the distal portion 247 of the corresponding cooling plate. Hence, a rotor disc may extend into the gap such that permanent magnets face the corresponding pole face.

The distal portions 247 of the heat conducting parts 241 of the cooling plates may be attached to respective face plates 1045 that are arranged on both sides of and at an axial distance from the stator, as illustrated in Fig. 10B. Consequently, a heat conducting path is established from the coils to the face plates 1045 from which the heat may dissipate into the surroundings.

Fig. 10C illustrates the stator of Fig. 10B assembled with a rotor 1070 on a bearing hub 1091. The rotor 1070 comprises rotor discs 1071 that extend into the gap between the pole faces 221, 222 and the corresponding opposing face plate. Each rotor disc has permanent magnets 1072 mounted to one of its sides that face the stator.

Although some embodiments have been described and shown in detail, the invention is not restricted to them, but may also be embodied in other ways within the scope of the subject matter defined in the following claims. In particular, it is to be understood that other embodiments may be utilized and structural and functional modifications may be made without departing from the scope of the present invention.

For example, the stator core segments of the embodiments described above may be advantageously made from soft magnetic composite material. Alternatively, they may be manufactured from another suitable material for magnetic cores, such as from laminated metal sheets.

Also, while the cooling plates of several embodiments have been shown as separate plates for respective stator segments, in some embodiments some or all of the cooling plates may be formed as a single combined plate, e.g. one plate for each side of the stator, e.g. so as to reduce manufacturing complexity

It will further be appreciated that embodiments of the machine described herein may be embodied with a rotor external or internal to the stator.

The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A stator for an electrical machine, the stator comprising a stator core and one or more coils; wherein the stator further comprises at least one cooling member, the cooling member comprising a heat receiving part and a heat conducting part wherein the heat receiving part is arranged in thermal contact with at least one of the one or more coils so as to allow heat flow from the coil into the cooling member; and wherein the heat conducting part extends from the heat receiving part away from the coil so as to conduct heat received by the heat receiving part away from the coil.

2. A stator according to claim 1, wherein the cooling member is formed as a separate component different from the stator core and different from the coil.

3. A stator according to any one of the preceding claims, wherein the heat receiving part and the heat conducting part are made from the same material.

4. A stator according to claim 3, wherein the cooling member is formed as a single component.

5. A stator according to any one of the preceding claims, wherein the coil comprises a number of turns wound around a coil centreline and the at least one coil has two outer ends spaced apart from another in the direction of the coil centreline; wherein the heat receiving part is in contact with one of the outer ends of the coil.

6. A stator according to any one of the preceding claims, wherein the cooling member is formed as a cooling plate.

7. A stator according to claim 6, wherein at least the heat receiving part of the cooling plate is arranged parallel with an outer end of the coil.

8. A stator according to claim 6 or 7; wherein the cooling plate is sandwiched between an end of the coil and a part of the stator core.

9. A stator according to any one of the preceding claims, wherein the stator core comprises a coil body portion around which the coil is wound and one or more pole portions each defining a pole face that faces towards the rotor so as to define the stator side of the air gap, and wherein the heat receiving part comprises an opening through which a part of the coil body portion that projects out of an end of the coil extends.

10. A stator according to any one of the preceding claims; wherein the heat receiving part comprises one or more slits extending through the heat receiving part.

11. A stator according to any one of the preceding claims; wherein a part of the heat conducting part of the cooling member is arranged in thermal contact with a heat sink.

12. A stator according to any one of the preceding claims; wherein the stator is a segmented stator comprising a plurality of stator segments and wherein each stator segment comprises one or more coils, a stator core segment of the stator core and one or more cooling members.

13. A stator according to claim 12, comprising a support structure having receiving elements, each for receiving a stator segment and where at least a part of the heat conducting part of the cooling members extend away from the support structure

14. A stator according to any one of the preceding claims; wherein the one or more coils are made from strips of an electrically conductive material.

15. An electrical machine comprising:
- a stator as defined in any one of claims 1 through 14; and
- a moving member operable to move relative to the stator.
